# EUROPEAN PATENT SPECIFICATION

(11) **EP 0 910 621 B1**
(45) Date of publication and mention of the grant of the patent: **16.01.2002**
(21) Application number: 97928198.7
(22) Date of filing: 12.06.1997
(51) Int. Cl.: C12H 1/04

(54) **FINING PRODUCT**
KLAERUNGSPRODUKT
PRODUIT DE COLLAGE

(30) Priority: 12.07.1996 EP 96201965; 26.03.1997 EP 97200910
(43) Date of publication of application: 28.04.1999
(73) Proprietor: QUEST INTERNATIONAL B.V., 1411 GP Naarden (NL)
(72) Inventor: EVANS, David J., Huizerstraatweg 28 NL-1411 GP Naarden (NL); HORGAN, William Lee Quest Int. Ireland Ltd., Cork (IE); RETFORD, Robert Clive, 12 Britton Street Smithfield, NSW 2164 (AU); TA, Loc, Phuoc Quest International Australia Ltd., Smithfield, NSW 2164 (AU)
(74) Representative: Kraag, F., Ir.
(86) International application number: EP9703096
(87) International publication number: WO9802520

(56) References cited:
- EP-A- 0 672 750
- GB-A- 2 255 347
- US-A- 4 489 100

## Description

The present invention relates to a fining product for beverages. More particularly it relates to a fining product in the form of a viscous, pumpable liquid or paste, and a process for the manufacture thereof.

Solubilized collagen has been used for many years in the clarification of beverages, particularly fermented beverages such as beer, wine and cider. After the fermentation process in the production of such beverages is complete, residual yeast and other organic matter remains present as a fine suspension and such matter must be removed in order to obtain a completely clear beverage. In a process known as "fining" solubilized collagen products, known for short as "finings", have been used for many years as an aid towards increasing the sedimentation rate of suspended solids in fermented beverages, particularly beer.

Especially in beer manufacture finings prepared from skin or swim bladders of certain tropical and sub-tropical fish, have been traditionally used and are known as isinglass. It is used in the brewery as a dilute acidic aqueous solution generally at pH below 5, particularly at or below pH 4. Isinglass finings are manufactured by solubilizing the fish collagen raw material with acid, which process is known as cutting. Dried or deep frozen swim bladders are used for this purpose, cf. GB-A-2 147 299 and EP-A-0 672 750. Isinglass finings have been supplied in the form of powders, dilute liquids or pastes. Powders are dispersed in dilute acid before use. Ready to use dilute liquids typically have a collagen concentration of 0,5-1% w/v and have pH substantially below 5 through the presence of a quantity of acid. Fining liquids with a collagen concentration above 1-2% and pH below 5 soon turn into gels on standing and thus become unmanageable. For this reason existing pastes contain little acid, but this may be added at the point of use after the paste is dispersed in, and diluted with, water. Traditional pastes, which have pH 5 or higher, suffer from the disadvantage that they are susceptible to microbial spoilage due to their relatively high pH and the fact that at this pH traditional preservatives such as sodium meta bisulphite, are not very effective. GB-B-2 255 347 describes a non-acidic paste which does not need to be used in conjunction with acid. However, apart from suffering from the same disadvantage as traditional pastes, it is also complicated to manufacture.

Concentrated pumpable liquid finings of pH well below 5 which are ready for use would offer advantages in the manufacture of clear fermented beverages because they could be added to the bulk of the beverage in metered quantities without first having to be diluted. Alternatively, because the collagen is already hydrated, the concentrated finings could be easily diluted on site and would immediately thereafter be ready for dosing in beer.

It is therefore an object of the present invention to provide a solubilized collagen fining as a concentrated pumpable liquid of pH below 5. It is also an object of the invention to provide a concentrated liquid fining which is stable to microbial spoilage and does not need any pretreatment or separate dilution before being added to the beverage to be fined. It is furthermore an object of the invention to provide a process for the manufacture of such concentrated liquid fining.

Accordingly, the invention provides an aqueous concentrated pumpable liquid fining characterized in that it comprises 3-40% by weight of collagen, 2-50% by weight of a water miscible organic solvent, a buffering system to provide a pH between 3.2 and 4.8 and a preservative to prevent microbial spoilage.

For the purposes of this invention the phrase "pumpable" means that the liquid may be viscous and have a paste-like consistency, but is pourable at ambient temperature, such that it can be forwarded and dosed to the beverage using pumping means which are known for use in the food and beverage industry. Thus, it generally has a viscosity below 30,000 cP at 20°C, preferably below 15,000 cP, at the time of use for fining the beverage. The liquid may have shear-thinning properties, i.e. become less viscous on application of shear such as by stirring or pumping.

The collagen concentration is preferably 5-20% w/w, more preferably 5-15%. The collagen can be of any suitable animal source. Preferably the collagen is obtained from fish, particularly from swim bladders, which is usually used for this purpose. However, collagen from other sources such as bovine, ovine or porcine collagen may suitably be used as well.

Suitable water miscible organic solvents are e.g.: ethanol, isopropanol, methanol, acetone, ethylene glycol and propylene glycol, glycerol, or mixtures thereof. Ethanol, methanol, isopropanol and acetone are particularly suitable and of these ethanol is preferred. The organic solvent (and other ingredients mentioned below) should be considered "food grade" in the amounts to be found in the final fermented beverage in the country where the product is used, but in this respect food legislation differs from country to country. The organic solvent is preferably present in the liquid fining according to the invention in an amount of 5-20% w/w, more preferably 5-15%.

The buffering system consists of a suitable (food grade) acid in combination with an alkalimetal salt thereof. Suitable buffering systems are derived from e.g.: phosphoric acid, citric acid, acetic acid, malic acid, lactic acid and tartaric acid and the alkali metal salts thereof . Citric acid/sodium citrate buffer is particularly suitable. The pH should preferably be 3.4 or higher, but not higher than 4.5, more preferably at or below 4.2.

The preservative can be any (food grade) compound able to prevent microbial spoilage and should be present in a quantity which is sufficient for that purpose. SO₂ generating systems, particularly (meta) bisulphite salts, are generally used for isinglass finings and are very effective in the pH range of the liquid fining according to the invention. They are used in an amount known in the art to be effective against microbial spoilage, i.e. generally to provide between 0.1 and 5% w/w, preferably 0.5-1.5%, of theoretically available SO₂ in the liquid. However, other presevatives such as benzoic acid may be used as well in amounts known in the art to be required for effective prevention of microbial spoilage.

The invention also provides a process for producing an aqueous, concentrated, pumpable liquid fining as described above which comprises the steps of homogeneously dispersing the collagen in water and thereafter adding a water-miscible organic solvent. The buffer system and preservative can be added to the mixture before or after the addition of the organic solvent. However, the choice of the stirring conditions is preferably adapted to the point at which these latter components are added. High shear mixing is preferred for dispersing the collagen in pure water.

The process is carried out at or below ambient temperature, preferably below 15°C, more preferably below 10°C For fish collagen temperatures below 6°C may be further preferred.

The degree of cutting of the collagen during the preparation of the liquid fining, and hence the performance of the fining in the beverage, can be altered by a combination of varying the pH of the final mixture and varying the amount of shear and the stirring time during the mixing of the collagen dispersion with the buffering system and with the organic solvent. Increasing the pH reduces the degree of cutting. Increasing the shear and the stirring time increases the degree of cutting. A higher degree of cutting leads to a higher viscosity of the liquid fining.

The collagen starting material can be in the form of dried, chopped fish swim bladders or bovine hide splits. Alternatively, the collagen starting material can also conveniently be a fine particulate product such as a powder. Prepared from fish swim bladders such products are commercially available under various trade names. They have usually been subjected to various pre-treatments such as washing and bleaching, to remove dirt, microbial contamination and offensive odours, and drying. Alternatively, fresh deep frozen material may be used.

The liquid fining according to the invention can be stored at ambient temperature without loss of quality. Storage time may be increased by using a lower storage temperature such as 10°C or lower. During storage some phase separation may occur which is easily removed by stirring.

The invention is further elucidated by the following nonlimiting examples

### Example 1

A liquid fining from fish collagen was preprared as set out below:

In 368.5g of water was dissolved 5.0g of sodium meta bisulphite, 7.45g of sodium citrate dihydrate and 19.2g of citric acid monohydrate and the solution chilled to 5°C. At this temperature 50g of Biofine P116 (commercial powdered fish swim bladder collagen marketed by Quest International) was added slowly while stirring with a paddle stirrer at 800 rpm. Once all the Biofine had been added the stirrer speed was increased to 1200 rpm and 50g of ethanol was added slowly. Stirring was continued for another 30 minutes. The resulting fining liquid had pH 3.6 and a viscosity of 500 cP measured at 20°C with a shear rate of 6.6 s⁻¹ with a Brookfield Viscometer. On standing for several days at ambient temperature some phase separation occurred but the liquid was easily made homogeneous again by stirring.

### Example 2

The process of Example 1 was repeated using the buffer mixtures given below. The pH and viscosity of the liquid fining obtained are also given below.

| Citric acid | Sodium citrate | pH | Viscosity |
|---|---|---|---|
| 10.0g | 12.0g | 4.2 | 450 cP |
| 10.0g | 18.8g | 4.8 | 400 cP |

### Example 3

A liquid fining from fish collagen was preprared as set out below:
Biofine P116 (25g) was gradually dispersed in water (336g) at 5°C using a high shear mixer (Ultra Turrax T25) at 10000 rpm for 5 minutes to homogenise the collagen. A solution of citric acid monohydrate (15g), sodium citrate dihydrate (18.8g), sodium metabisulphite (5g) and ethanol (50g) at 5°C was then added to the collagen and further mixed at 10000 rpm for 5 minutes. The resulting fining liquid had pH 4.5. On standing for several days at ambient temperature some phase separation occurred, but the liquid was easily made homogeneous again by stirring.

### Example 4

The process of example 3 was repeated using the buffer mixtures given below. The pH of the liquid finings are also given.

| Citric acid | Sodium citrate | pH |
|---|---|---|
| 10.0g | 18.8g | 4.8 |
| 36.0g | 18.8g | 3.7 |

### Example 5

A liquid fining from bovine collagen was prepared as set out below:

2800g of collagen split (moisture content 65% w/w, protein content 35% w/w) and 11,920g of water were mixed and passed through a Supraton in-line colloid mill.

A solution of 280g sodium citrate dihydrate, 800g citric acid monohydrate, 200g sodium metabisulphite and 2000g 96% ethanol was made in 2000g water at 0°C. This solution was added to the collagen split preparation and the resultant solution was passed again through the in-line colloid mill. During the mixing operations the mixture was kept below 13.6°C. The resultant liquid fining had a pH of 3.45 and remained pourable at 4°C.

### Example 6

A liquid fining from piscine collagen was prepared as set out below:

25g of chopped (10mm) Gungra maw (collagen) was soaked for 24 hours in 10 volumes of 2.0% hydrogen peroxide. After 24 hours, the peroxide was drained and the chopped Gungra was washed several times with water to rinse off the peroxide. Chilled water was added to the rinsed Gungra to give a total weight of 310g (25g from Gungra and 285g as added water). This combination was then mixed using a laboratory-scale Silverson mixer fitted with a square-holed high shear screen until a very fine cream was obtained. During this mixing time, the temperature was held below 10°C.

To a further 100g of chilled water was added 50g ethanol, 21g citric acid monohydrate, 13.75g sodium citrate dihydrate and 5g sodium metabisulphite. The solution was stirred until all components had dissolved. The resultant solution was then chilled to 5°C and added to the collagen / water mixture using a medium shear stirrer to avoid the possibility of shearing.

The resultant liquid fining had a pH of 3.82 and remained pourable at 4°C.

The liquid finings obtained according to the examples above all showed satisfactory fining properties when dispersed in beer.

## Claims

1. An aqueous concentrated pumpable liquid fining **characterized in that** it comprises 3-40% by weight of collagen, 2-50% by weight of a water miscible organic solvent, a buffering system to provide a pH between 3.2 and 4.8 and a preservative to prevent microbial spoilage.

2. Liquid fining according to claim 1 **characterized by** having a viscosity below 15,000 cps at 20°C.

3. Liquid fining according to claims 1 or 2 **characterized in that** the collagen is of fish or bovine origin.

4. Liquid fining according to claims 1-3 **characterized in that** it comprises 5-20% w/w of collagen.

5. Liquid fining according to claim 4 **characterized in that** it comprises 5-15% w/w of collagen.

6. Liquid fining according to claims 1-5 **characterized in that** the organic solvent is chosen from ethanol, isopropanol, methanol, acetone, ethylene glycol and propylene glycol, glycerol, or mixtures thereof.

7. Liquid fining according to claims 1-6 **characterized in that** it comprises 5-20% w/w/ of organic solvent

8. Liquid fining according to claims 1-7 **characterized in that** the buffering system is derived from: phosphoric acid, citric acid, acetic acid, malic acid, lactic acid or tartaric acid and the alkali metal salts thereof.

9. Liquid fining according to claims 1-8 **characterized in that** the pH is between 3.4 and 4.5, preferably between 3.4 and 4.2.

10. A process for producing an aqueous concentrated pumpable liquid fining as claimed in claims 1-9, **characterized in that** it comprises the steps of homogeneously dispersing the collagen in water, followed by adding the organic solvent.

11. A process according to claim 10 **characterized in that** it is carried out at or below ambient temperature.

12. A process according to claim 11 **characterized in that** it is carried out at or below 15°C.

13. A process according to claims 10-12 **characterized in that** the collagen is dispersed in pure water under high shear mixing.

## Patentansprüche

1. Wässriges, konzentriertes, pumpbares, flüssiges Klärmittel, **dadurch gekennzeichnet, dass** es 3-40 Gew.-% Kollagen, 2-50 Gew.-% eines wassermischbaren organischen Lösungsmittels, ein Puffersystem, das für einen pH-Wert zwischen 3,2 und 4,8 sorgt, und ein Konservierungsmittel zur Verhinderung von mikrobiellem Verderben enthält.

2. Flüssiges Klärmittel nach Anspruch 1, **dadurch gekennzeichnet, dass** es bei 20°C eine Viskosität unter 15000 cps aufweist.

3. Flüssiges Klärmittel nach Anspruch 1 oder 2, **dadurch gekennzeichnet, dass** das Kollagen von Fischen oder Rindern stammt.

4. Flüssiges Klärmittel nach Ansprüchen 1-3, **dadurch gekennzeichnet, dass** es 5-20% (w/w) Kollagen enthält.

5. Flüssiges Klärmittel nach Anspruch 4, **dadurch gekennzeichnet, dass** es 5-15% (w/w) Kollagen enthält.

6. Flüssiges Klärmittel nach Ansprüchen 1-5, **dadurch gekennzeichnet, dass** das organische Lösungsmittel aus Ethanol, Isopropanol, Methanol, Aceton, Ethylenglykol und Propylenglykol, Glycerin oder Mischungen davon ausgewählt ist.

7. Flüssiges Klärmittel nach Ansprüchen 1-6, **dadurch gekennzeichnet, dass** es 5-20% (w/w) organisches Lösungsmittel enthält.

8. Flüssiges Klärmittel nach Ansprüchen 1-7, **dadurch gekennzeichnet, dass** sich das Puffersystem von Phosphorsäure, Zitronensäure, Essigsäure, Äpfelsäure, Milchsäure oder Weinsäure und deren Alkalimetallsalze ableitet.

9. Flüssiges Klärmittel nach Ansprüchen 1-8, **dadurch gekennzeichnet, dass** der pH-Wert zwischen 3,4 und 4,5, vorzugsweise zwischen 3,4 und 4,2 liegt.

10. Verfahren zur Herstellung eines wässrigen, konzentrierten, pumpbaren, flüssigen Klärmittels nach Ansprüchen 1-9, **dadurch gekennzeichnet, dass** man das Kollagen in Wasser homogen dispergiert und anschliessend das organische Lösungsmittel zugibt.

11. Verfahren nach Anspruch 10, **dadurch gekennzeichnet, dass** man es bei oder unterhalb Raumtemperatur durchführt.

12. Verfahren nach Anspruch 11, **dadurch gekennzeichnet, dass** man es bei oder unterhalb 15°C durchführt.

13. Verfahren nach Ansprüchen 10-12, **dadurch gekennzeichnet, dass** man das Kollagen unter hochscherendem Mischen in reinem Wasser dispergiert.

## Revendications

1. Clarifiant liquide aqueux concentré apte à être pompé, **caractérisé en ce qu'**il comprend du collagène à concurrence de 3 à 40 % en poids, un solvant organique miscible à l'eau à concurrence de 2 à 50 % en poids, un système de tampon pour procurer un pH entre 3,2 et 4,8 et un conservant pour empêcher la contamination microbienne.

2. Clarifiant liquide selon la revendication 1, **caractérisé par le fait qu'**il possède une viscosité inférieure à 15.000 cps à 20 °C.

3. Clarifiant liquide selon la revendication 1 ou 2, **caractérisé en ce que** le collagène provient de poisson ou est d'origine bovine.

4. Clarifiant liquide selon les revendications 1 à 3, **caractérisé en ce qu'**il comprend du collagène à concurrence de 5 à 20 % en poids/poids.

5. Clarifiant liquide selon la revendication 4, **caractérisé en ce qu'**il comprend du collagène à concurrence de 5 à 15 % en poids/poids.

6. Clarifiant liquide selon les revendications 1 à 5, **caractérisé en ce que** le solvant organique est choisi parmi le groupe comprenant l'éthanol, l'isopropanol, le méthanol, l'acétone, l'éthylèneglycol et le propylèneglycol, le glycérol ou leurs mélanges.

7. Clarifiant liquide selon les revendications 1 à 6, **caractérisé en ce qu'**il comprend le solvant organique à concurrence de 5 à 20 % en poids/poids.

8. Clarifiant liquide selon les revendications 1 à 7, **caractérisé en ce que** le système de tampon dérive de l'acide phosphorique, de l'acide citrique, de l'acide acétique, de l'acide malique, de l'acide lactique ou de l'acide tartrique et de leurs sels de métaux alcalins.

9. Clarifiant liquide selon les revendications 1 à 8, **caractérisé en ce que** le pH s'élève entre 3,4 et 4,5, de préférence entre 3,4 et 4,2.

10. Procédé pour préparer un clarifiant liquide aqueux concentré apte à être pompé selon les revendications 1 à 9, **caractérisé en ce qu'**il comprend les étapes consistant à disperser de manière homogène le collagène dans de l'eau et à ajouter ensuite le solvant organique.

11. Procédé selon la revendication 10, **caractérisé en ce qu'**on le met en oeuvre à la température ambiante ou à une température inférieure à cette dernière.

12. Procédé selon la revendication 11, **caractérisé en ce qu'**on le met en oeuvre à une température égale ou inférieureà 15 °C.

13. Procédé selon les revendications 10 à 12, **caractérisé en ce que** le collagène est dispersé dans de l'eau pure dans des conditions de mélange à cisaillement élevé.
